# EUROPÄISCHE PATENTSCHRIFT

(11) **EP 2 446 163 B1**
(45) Veröffentlichungstag und Bekanntmachung des Hinweises auf die Patenterteilung: **13.03.2013**
(21) Anmeldenummer: 10721513.9
(22) Anmeldetag: 01.06.2010
(51) Int. Cl.: F16D 48/02

(54) **DRUCKMEDIUM-ZUFÜHREINRICHTUNG EINES HYDRAULISCH BETÄTIGBAREN SCHALTELEMENTS**
PRESSURE MEDIUM SUPPLY DEVICE OF A HYDRAULICALLY ACTUATED SWITCHING ELEMENT
DISPOSITIF D'ALIMENTATION D'UN ÉLÉMENT DE COMMANDE HYDRAULIQUE

(30) Priorität: 23.06.2009 DE 102009027097
(43) Veröffentlichungstag der Anmeldung: 02.05.2012
(73) Patentinhaber: ZF Friedrichshafen AG, 88038 Friedrichshafen (DE)
(72) Erfinder: MARTIN, Hans-Joachim, 88079 Kressbronn (DE); FRITZER, Anton, 88677 Markdorf (DE)
(86) Internationale Anmeldenummer: PCT/EP2010/057595
(87) Internationale Veröffentlichungsnummer: WO 2010/149470

(56) Entgegenhaltungen:
- EP-A1- 1 657 464
- EP-A2- 1 378 679
- WO-A1-2006/002450

## Beschreibung

Die Erfindung betrifft eine Druckmedium-Zuführeinrichtung eines hydraulisch betätigbaren Schaltelementes gemäß dem Oberbegriff des Patentanspruchs 1.

Bei hydraulisch betätigbaren Schaltelementen entsteht das Problem, dass auch bei kurzzeitig abgestelltem Verbrennungsmotor die Kupplungszuführkanäle leer laufen, was in nachteiliger Weise darin resultiert, dass bei Neustart des Fahrzeugs diese Kanäle erst wieder befüllt werden müssen. Dies bedeutet, dass durch die zusätzliche benötigte Befüllzeit der Kupplungszuführkanäle die Spontanität negativ beeinflusst wird. Des Weiteren muss die in den Kupplungszuführkanälen enthaltene Luft aus den Kanälen verdrängt werden, was sich auf die Kupplungsbefüllzeiten und somit auch auf die Schaltqualität negativ auswirkt.

Aus der DE 102 305 01 A1 ist ein Kupplungssystem bekannt, umfassend eine Kupplungseinrichtung, die wenigstens eine Kupplungsanordnung mit einer einer Abtriebswelle einer Antriebseinheit zugeordneten Eingangsseite und einer einer Getriebeeingangswelle zugeordneten Ausgangsseite aufweist und mittels wenigstens eines in die Kupplungseinrichtung integrierten, sich im Betrieb mitdrehenden hydraulischen Nehmerzylinders betätigbar ist.

Das bekannte Kupplungssystem umfasst eine stationär angeordnete Steuer-/Regel-Ventilanordnung, die einerseits an einer hydraulischen Druckmediumquelle und andererseits über eine Drehdurchführungsanordnung an dem hydraulischen Nehmerzylinder angeschlossen oder anschließbar ist, wobei ein Druckmediumreservoir vorgesehen ist, welches zumindest mit einem Nutz-Druckmediumaufnahmebereich oberhalb eines durch die Drehdurchführungsanordnung definierten Höhenbereichs angeordnet ist und aus dem einem die Drehdurchführungsanordnung umfassenden, die Steuer-/Regel-Ventilanordnung mit dem hydraulischen Nehmerzylinder verbindenden Hydrauliksystemabschnitt Druckmedium zuführbar ist, derart, dass Druckmedium an wenigstens einer Leckagestelle auf der Abflussseite ansteht, um einem Abfluss von Druckmedium aus dem Hydrauliksystemabschnitt entgegenzuwirken und/oder dass Druckmedium über wenigstens eine Zuflussstelle in den Hydrauliksystemabschnitt nachfließt, um einen Abfluss von Druckmedium aus dem Hydrauliksystemabschnitt auszugleichen.

Durch diese Konstruktion soll ein Austreten von Hydraulikmedium aus dem Hydrauliksystem reduziert werden; insbesondere soll ein Leerlaufen der Kupplungszuführkanäle bei kurzzeitig abgestelltem Motor verhindert werden. In nachteiliger Weise ist die aus der DE 102 305 01 A1 bekannte Konstruktion relativ kompliziert und mit hohen Herstellungs-, Montage- und Wartungskosten verbunden.

Aus der DE 196 05 225 A1 ist ein Kugelventil bekannt, welches derart ausgebildet ist, dass ein an einen Ventilsitz drückbarer Ventilkörper in einem Kanal beweglich und auf einer Strecke, die den Ventilsitz bildet, abdichtend angeordnet ist. Hierbei dichtet der Ventilkörper ab, so lange er sich in dem Kanal befindet; wenn der Ventilkörper gegen einen Federdruck aus dem Kanal herausgedrückt wird, öffnet sich ein Spalt, wodurch sich das Ventil öffnet.

Der vorliegenden Erfindung liegt die Aufgabe zugrunde, eine Druckmedium - Zuführeinrichtung eines hydraulisch betätigbaren Schaltelementes anzugeben, bei der ein Leerlaufen der Druckmedium-Zuführkanäle bei kurzzeitig abgestelltem Verbrennungsmotor auf einfache und kostengünstige Weise vermieden wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Druckmedium-Zuführeinrichtung eines hydraulisch betätigbaren Schaltelementes, umfassend zumindest einen mit einer Pumpe und mit einer Leitung zur Vorbefüllung des Schaltelementes fluidtechnisch verbundenen Druckmedium-Zuführkanal, bei der in den Druckmedium-Zuführkanal zwischen dem Schaltelement und dem Schaltelementventil ein zusätzliches Druckhalteventil integriert ist, so dass dieser in Leerlaufrichtung des Druckmedium-Zuführkanals verschließbar ist.

Hierbei ist das Druckhalteventil derart ausgeführt, dass ein Entleeren des Schaltelementes bzw. ein Entlüften der Druckmedium-Zuführeinrichtung ermöglicht wird.

Gemäß einer Ausführungsform der Erfindung umfasst das Ventil ein Gehäuse mit einem Einlass und einem an der dem Schaltelement zugewandten Seite des Ventils vorgesehenen Auslass, in dem ein Ventilsitz für einen Ventilkörper angeordnet ist, wobei der Ventilkörper an der dem Auslass zugewandten Seite des Ventils vorgesehen ist und bei einem Druck an der Auslassseite des Ventils, der höher ist, als der Druck an der Einlassseite gegen den Ventilsitz drückbar ist, um das Ventil zu verschließen.

Ferner umfasst das Ventil ein Federelement, welches zwischen dem Ventilsitz und einem Abdeckblech an der Einlassseite des Ventils unter Vorspannung angeordnet ist, derart, dass bei einem Druck an der Auslassseite des Ventils, der um einen vorgegebenen Wert höher ist, als der Druck an der Einlassseite, was beim Entleeren des Schaltelementes der Fall ist, der Druck in einer Komprimierung des Federelementes und somit in einer Verschiebung des Ventilsitzes in Richtung auf die Einlassseite resultiert, sodass das Druckmedium am Ventilsitz vorbei fließen kann, wodurch das Schaltelement in jedem Fall geöffnet werden kann.

Vorzugsweise ist das Federelement derart ausgeführt und vorgespannt, dass es erst bei einem Druck an der Auslassseite komprimierbar ist, der den Druck an der Einlassseite um 0,3 bar übersteigt.

Gemäß einer vorteilhaften Weiterbildung der Erfindung ist das Druckhalteventil so aufgebaut, dass die Befüllung des Schaltelementes über eine integrierte Befüllblende erfolgt. Hierbei wird beim Entleeren des Schaltelementes die integrierte Befüllblende umgangen, wodurch die Entleerzeiten verkürzt werden.

Für den Fall einer Doppelkupplung, umfasst die Druckmedium-Zuführeinrichtung einen Druckmedium-Zuführkanal für jede Kupplung, wobei gemäß der Erfindung in jeden Druckmedium-Zuführkanal ein zusätzliches Druckhalteventil bzw. eine Rückschlagblende integriert ist.

Durch die erfindungsgemäße Konzeption wird auf einfache und kostengünstige Weise vermieden, dass bei kurzzeitig abgestelltem Verbrennungsmotor die Druckmedium-Zuführkanäle von Schaltelementen leer laufen können, wodurch die Schaltqualität der Erstschaltung erheblich verbessert wird; die hier vorgestellte Druckmedium-Zuführeinrichtung kann beispielsweise bei Fahrzeugen mit einer Start-Stopp-Funktion vorgesehen sein. Ferner wird gewährleistet, dass ein Entleeren und ein Entlüften des Schaltelementes durchgeführt werden kann.

Die Erfindung wird im Folgenden anhand der beigefügten Figuren beispielhaft näher erläutert. Es zeigen:
- Figur 1:: Eine schematische Darstellung einer möglichen Ausführungsform einer Druckmedium - Zuführeinrichtung einer hydraulisch betätigbaren Doppelkupplung;
- Figur 2:: Eine schematische Schnittansicht eines gemäß der Erfindung ausgeführten Druckhalteventils; und
- Figur 3:: Eine perspektivische Explosionsdarstellung eines gemäß der Erfindung ausgeführten Druckhalteventils.

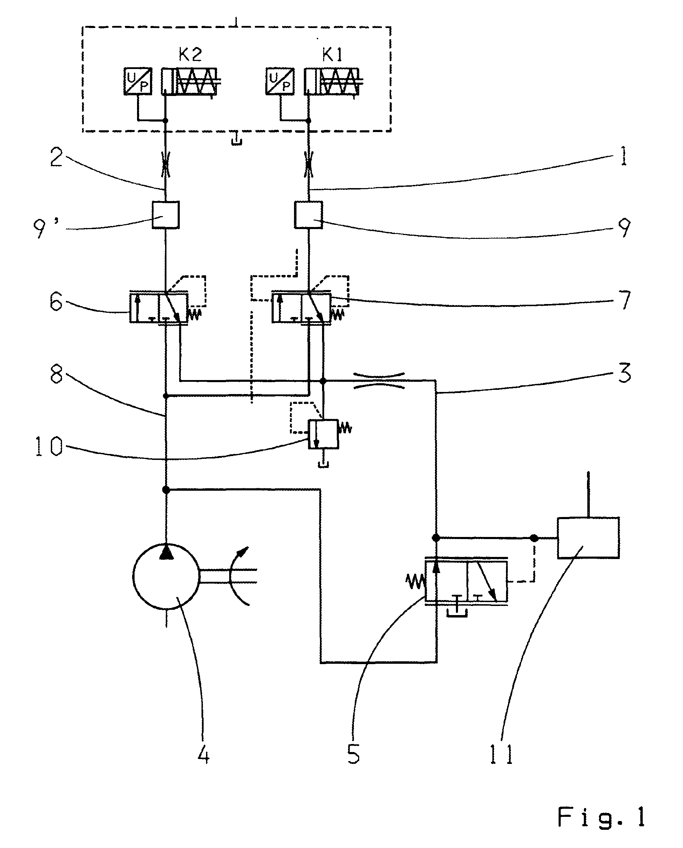

Gemäß der Erfindung und bezugnehmend auf Figur 1 umfasst die Druckmedium-Zuführeinrichtung einer hydraulisch betätigbaren Doppelkupplung zwei Druckmedium-Zuführkanäle 1, 2, die jeweils einer Kupplung K1, K2 der Doppelkupplung zugeordnet sind und jeweils ein Kupplungsventil 6, 7 aufweisen. Des Weiteren ist eine gemeinsame Leitung 3 zur Vorbefüllung beider Kupplungen K1, K2 vorgesehen, die einerseits mit einem der Pumpe 4 nachgeschalteten Druckbegrenzungsventil 5 und andererseits mit beiden Druckmedium-Zuführkanälen 1, 2 fluidtechnisch verbunden ist. Die Druckmedium-Zuführkanäle 1, 2 sind über eine weitere Leitung 8 mit der Pumpe 4 verbunden. In der beigefügten Figur ist ein Ventil zur Einstellung des Vorbefülldrucks mit 10 und der Druckregler mit 11 bezeichnet.

Gemäß der Erfindung ist in jeden Druckmedium-Zuführkanal 1, 2 zwischen dem Schaltelement K1, K2 und dem jeweiligen Schaltelementventil 6, 7 ein zusätzliches Druckhalteventil 9, 9' bzw. eine Rückschlagblende integriert, so dass die Druckmedium-Zuführkanäle 1, 2 in Leerlaufrichtung der Druckmedium-Zuführkanäle 1, 2 verschließbar sind.

Ohne die erfindungsgemäß angeordneten Ventile 9, 9' würden die Druckmedium-Zuführkanäle 1, 2 der Kupplungen K1, K2 bei abgestelltem Motor schneller leerlaufen.

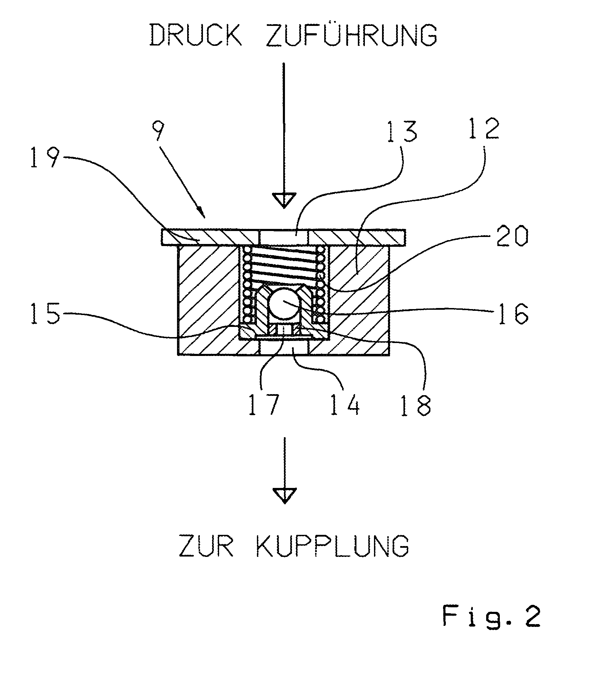

Gegenstand der Figur 2 ist ein erfindungsgemäß im Druckmedium-Zuführkanal zwischen einem Schaltelement K1 und dem Schaltelementventil 6 vorgesehenes Druckhalteventil 9.

Das Ventil 9 umfasst ein Gehäuse 12 mit einem Einlass 13 und einem an der dem Schaltelement zugewandten Seite des Ventils 9 vorgesehenen Auslass 14, wobei im Gehäuse 12 ein Ventilsitz 15 für einen vorzugsweise als Kugel ausgeführten Ventilkörper 16 angeordnet ist, wobei der Ventilkörper 16 an der dem Auslass 14 d.h. dem Schaltelement zugewandten Seite des Ventils 9 vorgesehen ist. Der Ventilkörper 16 wird durch einen zumindest eine Öffnung 17 aufweisenden Verschlussdeckel 18 im Gehäuse 12 gehalten.

Wie aus Figur 2 ersichtlich, umfasst das Ventil 9 ein zwischen dem Ventilsitz 15 und einem Abdeckteil bzw. Abdeckblech 19 an der Einlassseite des Ventils unter Vorspannung angeordnetes Federelement 20.

Die Funktionsweise des Ventils 9 ist wie folgt: Wenn der Druck an der Auslassseite des Ventils 9 höher ist, als der Druck an der Einlassseite wird der Ventilkörper 16 gegen den Ventilsitz 15 gedrückt, wodurch das Ventil 9 verschlossen ist. Dadurch wird gewährleistet, dass bei kurzzeitig abgestelltem Verbrennungsmotor die Druckmedium-Zuführkanäle von Schaltelementen leer laufen. Wenn jedoch der Druck an der Auslassseite des Ventils 9 um einen vorgegebenen von der Auslegung und Vorspannung des Federelementes abhängigen Schwellenwert höher ist, als der Druck an der Einlassseite, was beim Entleeren des Schaltelementes der Fall ist, resultiert dieser Druck in einer Komprimierung des Federelementes 20 und somit in einer Verschiebung des Ventilsitzes 15 in Richtung auf die Einlassseite, sodass das Druckmedium am Ventilsitz 15 vorbei fließen kann, wodurch das Schaltelement in jedem Fall geöffnet werden kann.

Vorzugsweise ist das Federelement derart ausgeführt und vorgespannt, dass es erst bei einem Druck an der Auslassseite komprimierbar ist, der den Druck an der Einlassseite um 0,3 bar übersteigt. Je nach konstruktiver Auslegung des Systems können jedoch andere Schwellenwerte für die Komprimierung des Federelementes erzielt werden.

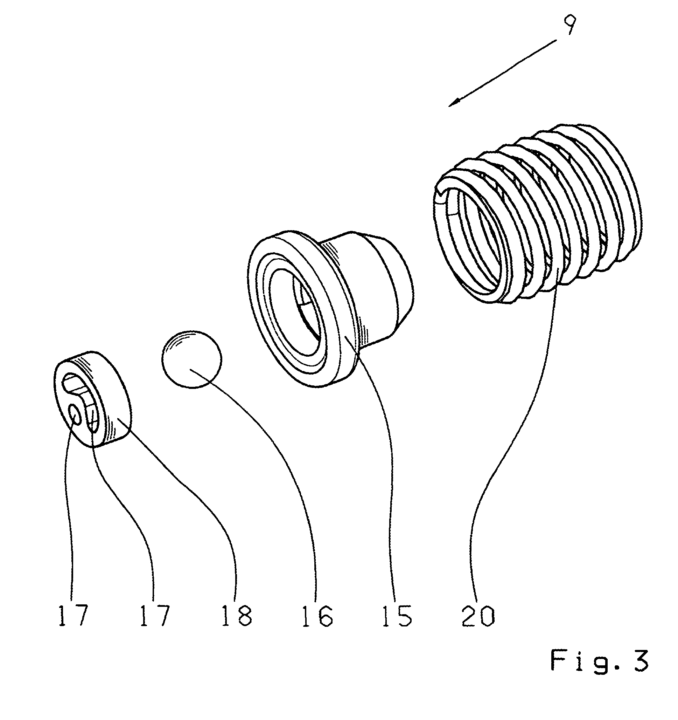

Zum besseren Verständnis der Erfindung ist in Figur 3 eine perspektivische Explosionsdarstellung des in Figur 2 gezeigten Ventils 9 ohne das Ventilgehäuse und die Abdeckung an der Einlassseite gezeigt.

### Bezugszeichen

- 1: Druckmedium-Zuführkanal
- 2: Druckmedium-Zuführkanal
- 3: Leitung zur Vorbefüllung
- 4: Pumpe
- 5: Druckbegrenzungsventil
- 6: Kupplungsventil
- 7: Kupplungsventil
- 8: Leitung
- 9, 9': Druckhalteventil, Rückschlagblende
- 10: Ventil zur Einstellung des Vorbefülldrucks
- 11: Druckregler
- 12: Gehäuse
- 13: Einlass
- 14: Auslass
- 15: Ventilsitz
- 16: Ventilkörper
- 17: Öffnung
- 18: Verschlussdeckel
- 19: Abdeckblech
- 20: Federelement
- K1: Schaltelement
- K2: Schaltelement

## Patentansprüche

1. Druckmedium-Zuführeinrichtung eines hydraulisch betätigbaren Schaltelementes (K1, K2), umfassend zumindest einen mit einer Pumpe (4) und mit einer Leitung (3) zur Vorbefüllung des Schaltelementes fluidtechnisch verbundenen Druckmedium-Zuführkanal (1, 2), **dadurch gekennzeichnet, dass** in den Druckmedium-Zuführkanal (1, 2) zwischen dem Schaltelement und dem Schaltelementventil (6, 7) ein zusätzliches Druckhalteventil (9, 9') integriert ist, so dass dieser in Leerlaufrichtung des Druckmedium-Zuführkanals (1, 2) verschließbar ist, wobei das Druckhalteventil (9, 9') derart ausgeführt ist, dass ein Entleeren des Schaltelementes bzw. ein Entlüften der Druckmedium-Zuführeinrichtung ermöglicht wird.

2. Druckmedium-Zuführeinrichtung nach Anspruch 1, **dadurch gekennzeichnet, dass** für den Fall einer Doppelkupplung, die Druckmedium-Zuführeinrichtung einen Druckmedium-Zuführkanal (1, 2) für jede Kupplung (K1, K2) umfasst, wobei in jeden Druckmedium-Zuführkanal (1, 2) ein zusätzliches Druckhalteventil (9, 9') integriert ist.

3. Druckmedium-Zuführeinrichtung eines hydraulisch betätigbaren Schaltelementes (K1, K2), nach Anspruch 1 oder 2, **dadurch gekennzeichnet, dass** das Druckhalteventil (9, 9') ein Gehäuse (12) mit einem Einlass (13) und einem an der dem Schaltelement (K1, K2) zugewandten Seite des Druckhalteventils (9, 9') vorgesehenen Auslass (14) umfasst, wobei im Gehäuse (12) ein Ventilsitz (15) für einen an der dem Auslass (14) zugewandten Seite des Druckhalteventils (9, 9') vorgesehenen Ventilkörper (16) angeordnet ist, der durch einen zumindest eine Öffnung (17) aufweisenden Verschlussdeckel (18) im Gehäuse (12) gehalten wird und bei einem Druck an der Auslassseite des Druckhalteventils (9, 9'), der höher ist, als der Druck an der Einlassseite gegen den Ventilsitz (15) drückbar ist, um das Druckhalteventil (9, 9') zu verschließen und wobei das Druckhalteventil (9, 9') ein zwischen dem Ventilsitz (15) und einem Abdeckteil bzw. Abdeckblech (19) an der Einlassseite des Ventils (9, 9') unter Vorspannung angeordnetes Federelement (20) aufweist, welches derart ausgeführt und vorgespannt ist, dass es erst bei einem Druck an der Auslassseite komprimierbar ist, der den Druck an der Einlassseite um einen vorgegebenen Wert übersteigt, um ein Entleeren des Schaltelementes (K1, K2) zu ermöglichen, was durch die Verschiebung des Ventilsitzes (15) in Richtung auf die Einlassseite erfolgt, sodass das Druckmedium am Ventilsitz (15) vorbei fließen kann.

4. Druckmedium-Zuführeinrichtung eines hydraulisch betätigbaren Schaltelementes (K1, K2), nach Anspruch 3, **dadurch gekennzeichnet, dass** das Federelement (20) derart ausgeführt und vorgespannt ist, dass es erst bei einem Druck an der Auslassseite komprimierbar ist, der den Druck an der Einlassseite um 0,3 bar übersteigt.

5. Druckmedium-Zuführeinrichtung eines hydraulisch betätigbaren Schaltelementes (K1, K2), nach Anspruch 3 oder 4, **dadurch gekennzeichnet, dass** der Ventilköper (16) als Kugel ausgeführt ist.

6. Druckmedium-Zuführeinrichtung eines hydraulisch betätigbaren Schaltelementes (K1, K2), nach einem der vorangehenden Ansprüche, **dadurch gekennzeichnet, dass** das Druckhalteventil (9, 9') derart aufgebaut ist, dass die Befüllung des Schaltelementes (K1, K2) über eine integrierte Befüllblende erfolgt, wobei beim Entleeren des Schaltelementes (K1, K2) die integrierte Befüllblende umgangen wird.

## Claims

1. Pressure medium supply device of a hydraulically actuable switching element (K1, K2), comprising at least one pressure medium supply duct (1, 2) which is fluidically connected to a pump (4) and to a line (3) for the prefilling of the switching element, **characterized in that** an additional pressure-maintaining valve (9, 9') is integrated in the pressure medium supply duct (1, 2) between the switching element and the switching element valve (6, 7) such that said pressure medium supply duct can be closed off in the draining direction of the pressure medium supply duct (1, 2), wherein the pressure-maintaining valve (9, 9') is designed such that an emptying of the switching element and/or a ventilation of the pressure medium supply device is permitted.

2. Pressure medium supply device according to Claim 1, **characterized in that**, in the case of a double clutch, the pressure medium supply device comprises a pressure medium supply duct (1, 2) for each clutch (K1, K2), wherein an additional pressure-maintaining valve (9, 9') is integrated into each pressure medium supply duct (1, 2).

3. Pressure medium supply device of a hydraulically actuable switching element (K1, K2), according to Claim 1 or 2, **characterized in that** the pressure-maintaining valve (9, 9') comprises a housing (12) with an inlet (13) and with an outlet (14) provided on that side of the pressure-maintaining valve (9, 9') which faces toward the switching element (K1, K2), wherein in the housing (12) there is arranged a valve seat (15) for a valve body (16) provided on that side of the pressure-maintaining valve (9, 9') which faces toward the outlet (14), which valve body is held in the housing (12) by a closure cap (18) which has at least one opening (17), and which valve body, when a pressure on the outlet side of the pressure-maintaining valve (9, 9') is higher than the pressure on the inlet side, can be pressed against the valve seat (15) in order to close off the pressure-maintaining valve (9, 9'), and wherein the pressure-maintaining valve (9, 9') has a spring element (20) which is arranged under preload between the valve seat (15) and a cover part or cover plate (19) on the inlet side of the valve (9, 9'), which spring element is designed and preloaded such that it can be compressed, so as to permit an emptying of the switching element (K1, K2) which takes place by the displacement of the valve seat (15) in the direction of the inlet side such that pressure medium can flow past the valve seat (15), only when the pressure on the outlet side exceeds the pressure on the inlet side by a predefined value.

4. Pressure medium supply device of a hydraulically actuable switching element (K1, K2), according to Claim 3, **characterized in that** the spring element (20) is designed and preloaded such that it can be compressed only when the pressure on the outlet side exceeds the pressure on the inlet side by 0.3 bar.

5. Pressure medium supply device of a hydraulically actuable switching element (K1, K2), according to Claim 3 or 4, **characterized in that** the valve body (16) is in the form of a ball.

6. Pressure medium supply device of a hydraulically actuable switching element (K1, K2), according to one of the preceding claims, **characterized in that** the pressure-maintaining valve (9, 9') is constructed such that the filling of the switching element (K1, K2) takes place via an integrated filling orifice, wherein the integrated filling orifice is bypassed during the emptying of the switching element (K1, K2).

## Revendications

1. Dispositif d'alimentation en fluide sous pression d'un élément de commutation (K1, K2) à commande hydraulique, comprenant au moins un canal d'alimentation en fluide sous pression (1, 2) connecté fluidiquement à une pompe (4) et à une conduite (3) en vue du pré-remplissage de l'élément de commutation, **caractérisé en ce que** dans le canal d'alimentation en fluide sous pression (1, 2) entre l'élément de commutation et la soupape de l'élément de commutation (6, 7) est intégrée une soupape de maintien de pression supplémentaire (9, 9'), de sorte que celle-ci puisse être fermée dans la direction de marche à vide du canal d'alimentation en fluide sous pression (1, 2), la soupape de maintien de pression (9, 9') étant réalisée de telle sorte qu'une vidange de l'élément de commutation ou un désaérage du dispositif d'alimentation en fluide sous pression soit possible.

2. Dispositif d'alimentation en fluide sous pression selon la revendication 1, **caractérisé en ce que** dans le cas d'un embrayage double, le dispositif d'alimentation en fluide sous pression comprend un canal d'alimentation en fluide sous pression (1, 2) pour chaque embrayage (K1, K2), dans chaque canal d'alimentation en fluide sous pression (1, 2) étant intégrée une soupape de maintien de pression supplémentaire (9, 9').

3. Dispositif d'alimentation en fluide sous pression d'un élément de commutation (K1, K2) à commande hydraulique selon la revendication 1 ou 2, **caractérisé en ce que** la soupape de maintien de pression (9, 9') comprend un boîtier (12) avec une entrée (13) et une sortie (14) prévue sur le côté de la soupape de maintien de pression (9, 9') tourné vers l'élément de commutation (K1, K2), un siège de soupape (15) pour un corps de soupape (16) prévu sur le côté de la soupape de maintien de pression (9, 9') tourné vers la sortie (14) étant disposé dans le boîtier (12), lequel corps de soupape est maintenu dans le boîtier (12) par un couvercle de fermeture (18) présentant au moins une ouverture (17) et, dans le cas où la pression au niveau du côté de sortie de la soupape de maintien de pression (9, 9') est supérieure à la pression au niveau du côté d'entrée, pouvant être pressé contre le siège de soupape (15), afin de fermer la soupape de maintien de pression (9, 9'), et la soupape de maintien de pression (9, 9') présentant un élément de ressort (20) disposé avec précontrainte entre le siège de soupape (15) et une partie de recouvrement ou une tôle de recouvrement (19) au niveau du côté d'entrée de la soupape (9, 9'), lequel élément de ressort est réalisé et est précontraint de telle sorte qu'il puisse être comprimé à partir d'une pression au niveau du côté de sortie qui dépasse la pression au niveau du côté d'entrée d'une valeur prédéfinie, afin de permettre une vidange de l'élément de commutation (K1, K2), ce qui se produit par le déplacement du siège de soupape (15) dans la direction du côté d'entrée, de telle sorte que le fluide sous pression puisse s'écouler devant le siège de soupape (15).

4. Dispositif d'alimentation en fluide sous pression d'un élément de commutation (K1, K2) à commande hydraulique selon la revendication 3, **caractérisé en ce que** l'élément de ressort (20) est réalisé et précontraint de telle sorte qu'il puisse être comprimé à partir d'une pression au niveau du côté de sortie qui dépasse la pression au niveau du côté d'entrée de 0,3 bar.

5. Dispositif d'alimentation en fluide sous pression d'un élément de commutation (K1, K2) à commande hydraulique selon la revendication 3 ou 4, **caractérisé en ce que** le corps de soupape (16) est réalisé sous forme de bille.

6. Dispositif d'alimentation en fluide sous pression d'un élément de commutation (K1, K2) à commande hydraulique selon l'une quelconque des revendications précédentes, **caractérisé en ce que** la soupape de maintien de pression (9, 9') est construite de telle sorte que le remplissage de l'élément de commutation (K1, K2) s'effectue par le biais d'un diaphragme de remplissage intégré, le diaphragme de remplissage intégré étant contourné lors de la vidange de l'élément de commutation (K1, K2).
